# FASCICULE DE BREVET EUROPEEN

(11) **EP 4 015 304 B1**
(45) Date de publication et mention de la délivrance du brevet: **25.10.2023**
(21) Numéro de dépôt: 21212547.0
(22) Date de dépôt: 06.12.2021
(51) Int. Cl.: B60N 3/10, B60R 7/04

(54) **CONSOLE PORTATIVE POUR UN VÉHICULE**
TRAGBARE KONSOLE FÜR EIN FAHRZEUG
PORTABLE CONSOLE FOR A VEHICLE

(30) Priorité: 18.12.2020 FR 2013621
(43) Date de publication de la demande: 22.06.2022
(73) Titulaire: Renault s.a.s, 92100 Boulogne Billancourt (FR)
(72) Inventeur: BEZEAULT, Loic, 78084 GUYANCOURT CEDEX (FR); HODIESNE, Thierry, 78084 GUYANCOURT CEDEX (FR)
(74) Mandataire: Renault Group

(56) Documents cités:
- DE-A1- 19 808 447
- DE-U1- 9 413 016
- FR-A1- 2 897 028
- US-B1- 6 282 906

## Description

L'invention concerne une console portative, notamment destinée à être fixée de façon amovible à un socle sur le plancher d'un véhicule automobile. L'invention porte aussi sur un système de console comprenant une telle console et un socle. L'invention porte encore sur un véhicule, notamment un véhicule automobile, comprenant un tel système de console.

Il apparaît important de prévoir une ventilation performante dans l'habitacle d'un véhicule automobile et une zone réfrigérée pour des boissons et/ou de l'alimentation.

On connaît des véhicules possédant des zones réfrigérées dans l'habitacle. De telles zones réfrigérées peuvent correspondre par exemple à une boîte à gants principale, à une console centrale, à un porte-gobelet (« cup-holder » en anglais), à des zones de rangement inférieures de portes latérales. Toutefois, ces solutions présentent des inconvénients. En particulier, de telles zones réfrigérées sont fixes et non amovibles. En outre, elles utilisent le système d'air conditionné ou de climatisation principal (HVAC) du véhicule pour générer du froid. L'indépendance de tels dispositifs par rapport au véhicule n'est pas possible ou très difficile. Les zones réfrigérées perdent le froid dès l'arrêt du moteur et il n'est pas possible de les alimenter indépendamment du système d'air conditionné du véhicule. En effet, pour des véhicules utilisant un moteur thermique, la climatisation fonctionne seulement après démarrage du moteur. De telles zones réfrigérées sont donc alimentées en froid seulement lorsque le véhicule se déplace. Pour les véhicules à motorisation électrique ou hybride, la climatisation peut fonctionner avant le démarrage du moteur mais il en résulte une consommation élevée d'énergie. De telles solutions ne permettent donc pas de réaliser un pré-conditionnement thermique des zones réfrigérées avant l'entrée des usagers dans le véhicule ou avant la mise en place de boissons ou d'aliments dans les zones réfrigérées. Des solutions existent utilisant des systèmes de refroidissement par fluide de refroidissement indépendants de celui du véhicule, comme des HVAC annexes. Toutefois, ces solutions présentent des inconvénients. En particulier, de telles solutions présentent une masse élevée et requièrent une conception complexe.

Par ailleurs, des glacières portatives existent permettant d'être installées hors du véhicule et dans l'habitacle ou le coffre d'un véhicule automobile. Toutefois, ces solutions présentent des inconvénients. En particulier, de telles glacières ne sont pas pourvues de système permettant de les maintenir en place dans le véhicule et requièrent l'utilisation d'un système de maintien annexe, par exemple une ceinture de sécurité.

Le document DE 198 08 447 A1 divulgue un exemple de console de l'art antérieur.

Le but de l'invention est de fournir une console amovible apte à être réfrigérée remédiant aux inconvénients ci-dessus et améliorant les dispositifs connus de l'art antérieur. En particulier, l'invention permet de réaliser une console portative apte à être réfrigérée indépendamment du système de climatisation d'un véhicule, qui permette d'être maintenue en place dans le véhicule et qui permette une ventilation additionnelle de l'habitacle du véhicule.

Selon l'invention, une console, notamment destinée à être fixée de façon amovible à un socle, comprend :
- un corps apte à être réfrigéré au moins partiellement, comprenant un bac de rangement apte à être réfrigéré, un compartiment comprenant au moins un support destiné à recevoir un récipient, et une paroi, comprenant au moins un trou, interposée entre le bac de rangement et le compartiment, le bac de rangement et le compartiment comprenant respectivement une première ouverture et une deuxième ouverture ;
- un système de refroidissement ;
- une porte apte à passer d'une position fermée, dans laquelle la première ouverture du bac de rangement est obturée, à une position ouverte, dans laquelle la première ouverture du bac de rangement est dégagée ;
- un volet apte à passer d'une position déployée, dans laquelle la deuxième ouverture du compartiment est obturée, à une position rangée, dans laquelle la deuxième ouverture du compartiment est dégagée, la position rangée du volet permettant d'obturer l'au moins un trou de ladite paroi.

Le fond du compartiment peut être perforé, et la console peut comprendre en outre un ventilateur disposé sous le fond perforé du compartiment.

La porte peut comprendre une poignée, notamment configurée pour verrouiller et déverrouiller la console par rapport à un socle.

La console peut comprendre en outre un système de fixation apte au verrouillage et au déverrouillage de la porte sur le bac de rangement.

Le système de refroidissement peut comprendre un système thermoélectrique disposé sous le bac de rangement et le compartiment, le système thermoélectrique comprenant notamment une cellule de Peltier.

La console peut comprendre en outre un tiroir apte à coulisser dans la partie basse, notamment pour le rangement d'un dispositif d'alimentation nomade.

L'invention concerne également un système de console comprenant une console définie précédemment et un socle configuré pour recevoir et maintenir la console de façon amovible.

La console peut comprendre au moins un logement creux destiné à recevoir un ergot du socle pour le verrouillage de la console sur le socle, notamment un premier logement creux destiné à recevoir un premier ergot du socle et un deuxième logement creux destiné à recevoir un deuxième ergot du socle.

La console peut comprendre au moins un contacteur électrique destiné à venir en contact avec un contacteur électrique du socle.

L'invention concerne également un véhicule, notamment un véhicule automobile, comprenant une console définie précédemment ou un système de console défini précédemment.

Les dessins annexés représentent, à titre d'exemple, un mode de réalisation d'une console selon l'invention et un mode de réalisation d'un système de console selon l'invention.
[Fig. 1] La figure 1 représente un véhicule automobile équipé d'un système de console centrale amovible.
[Fig. 2] La figure 2 est une vue en perspective représentant un mode de réalisation d'une console.
[Fig. 3] La figure 3 est une vue en coupe longitudinale représentant un mode de réalisation d'une console.
[Fig. 4] La figure 4 est une vue de dessus en perspective et en coupe représentant une portion de la console.
[Fig. 5] La figure 5 est une vue en perspective représentant certains éléments de la console.
[Fig. 6] La figure 6 est une vue de dessus et en perspective représentant un mode de réalisation d'une console.
[Fig. 7] La figure 7 est une vue en perspective représentant la portion arrière d'un mode de réalisation d'une console.
[Fig. 8] La figure 8 représente un véhicule automobile équipé d'un système de console amovible, la porte du bac de rangement étant en position fermée et le volet du compartiment comprenant un support pour un récipient étant en position rangée.
[Fig. 9] La figure 9 représente un véhicule automobile équipé d'un système de console amovible, la porte étant en position ouverte et le volet étant en position rangée.
[Fig. 10] La figure 10 est une vue en perspective représentant le déverrouillage de la console par rapport à un socle.
[Fig. 11] La figure 11 est une vue de dessous et en perspective similaire à la figure 10.
[Fig. 12] La figure 12 est une vue en coupe longitudinale représentant un mode de réalisation de la console.

L'invention propose une console amovible apte à être réfrigérée avant sa mise en place dans l'habitacle d'un véhicule, et pouvant être utilisée hors d'un véhicule avec une alimentation indépendante.

Avantageusement, la console permet en outre d'assurer une fonction de ventilation ou d'aération complémentaire de l'habitacle d'un véhicule pour augmenter la sensation de froid dans le véhicule.

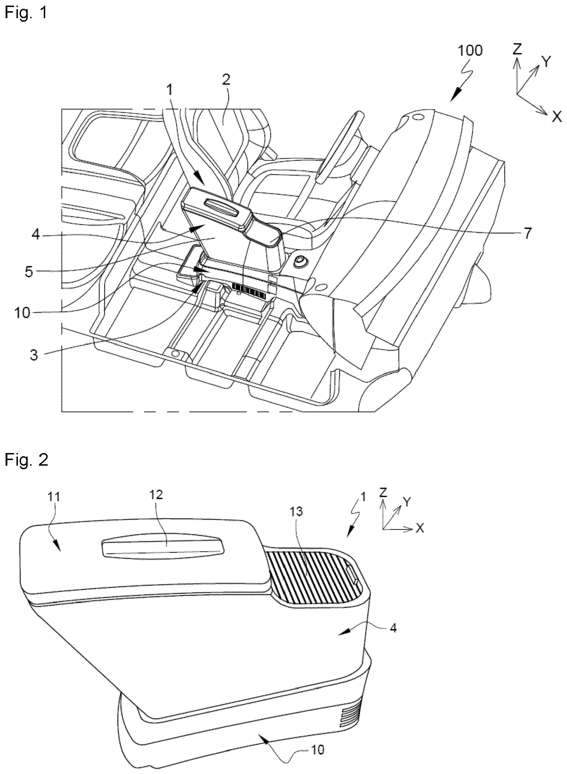

Un exemple d'un véhicule automobile 100 équipé d'un mode de réalisation d'une console amovible 1 est décrit ci-après en référence à la figure 1.

La console 1 est par exemple destinée à être positionnée à l'emplacement d'une console centrale d'un véhicule, notamment un véhicule automobile.

Par console centrale d'un véhicule, on entend une console disposée dans l'habitacle du véhicule sur le plancher du véhicule, entre le siège du conducteur et le siège du passager avant.

On définit un repère orthonormé direct dans lequel l'axe X correspond à la direction longitudinale du véhicule, dans laquelle le véhicule se déplace habituellement en ligne droite. L'axe X est orienté de l'arrière vers l'avant du véhicule, de l'arrière vers l'avant de la console 1. L'axe Y correspond à la direction transversale du véhicule. L'axe Y est orienté du côté droit vers le côté gauche du véhicule et de la console 1. L'axe Z est un axe sensiblement vertical, et est orienté du bas vers le haut, de la partie inférieure vers la partie supérieure du véhicule et de la console 1.

La console 1 peut être destinée à être fixée, de façon amovible, à un socle 3.

Le socle 3 peut être fixé dans l'habitacle d'un véhicule 100 sur le plancher du véhicule, par exemple entre le siège 2 du conducteur et le siège du passager avant (non représenté).

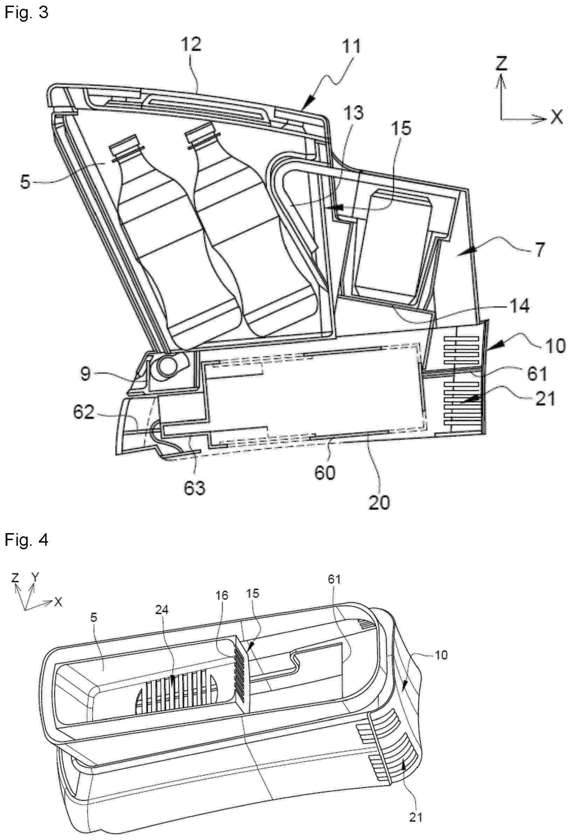

Un mode de réalisation d'une console 1 est décrit ci-après en référence aux figures 2 et 3.

La console 1 comprend un corps 4 apte à être réfrigéré au moins partiellement grâce à un système de refroidissement 10 intégré dans la console 1.

Avantageusement, le corps 4 de la console 1 est compartimenté. La console 1 peut comprendre deux compartiments aptes à être réfrigérés.

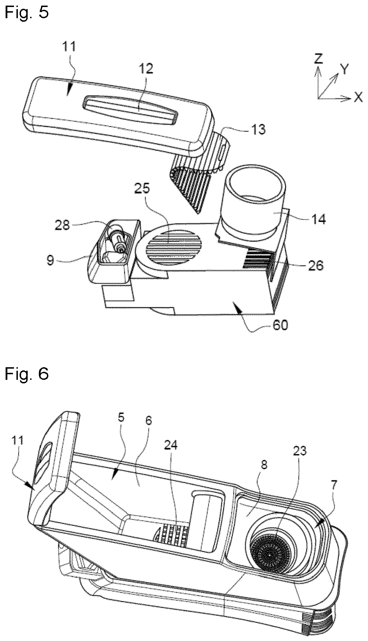

Le corps 4 de la console 1 comprend un bac ou compartiment de rangement 5 principal, apte à être réfrigéré, et un compartiment 7 comprenant au moins un support 14 destiné à recevoir un récipient. Le bac de rangement 5 est destiné au rangement ou au stockage d'objets divers, notamment d'objets nécessitant d'être réfrigérés ou d'être maintenus au froid. Le support 14 du compartiment 7 (figure 5) est par exemple de type porte-gobelet (« cup-holder » en anglais). Le compartiment 7 est destiné à réfrigérer un récipient contenant par exemple une boisson, et est en outre destiné à assurer une fonction de ventilation complémentaire de l'habitacle.

La console 1 permet d'assurer une fonction de type glacière, grâce au bac de rangement 5 apte à être réfrigéré, et une fonction de porte-gobelet et de ventilation, grâce au compartiment 7.

Le compartiment 7 et le bac de rangement 5 sont indépendants. Une paroi 15 perforée, interposée entre le compartiment 7 et le bac de rangement 5, permet le passage de l'air, comme cela est décrit plus en détails ci-après.

Le compartiment 7 peut être réfrigéré ou non. Le compartiment 7 comprend un ou plusieurs supports destinés à recevoir un récipient, notamment de type porte-gobelet.

Le compartiment 7 est par exemple disposé devant le bac de rangement 5 dans la direction longitudinale X lorsque la console 1 est positionnée sur le socle 3 dans le véhicule 100.

L'air frais du bac de rangement 5 est destiné à être recyclé dans le processus de refroidissement du système de refroidissement. Le compartiment 7 permet de refroidir la zone du porte-gobelet 14. Avantageusement, les parois de la console 1 sont hermétiques et athermiques.

Le corps 4 de la console 1 est par exemple en un matériau composite ou plastique, par exemple polypropylène.

Avantageusement, la console 1 comprend un moyen d'isolation entre le corps 4 de la console 1 et l'habillage de la console 1. Le moyen d'isolation est par exemple en une mousse ou un matériau de type naturel ou composite, par exemple en polystyrène ou en polypropylène expansé. Le moyen d'isolation est destiné à créer une paroi hermétique pour la console 1. L'habillage est par exemple en un matériau plastique.

La console 1 comprend un système d'ouverture / fermeture pour accéder au bac de rangement 5 et au compartiment 7 du corps 4.

Le bac de rangement 5 comprend une ouverture supérieure 6, nommée première ouverture. Le compartiment 7 comprend une ouverture supérieure 8, nommée deuxième ouverture.

Avantageusement, la console 1 comprend une porte 11 apte à passer d'une position fermée, dans laquelle l'ouverture supérieure 6 du bac de rangement 5 est obturée, à une position ouverte, dans laquelle l'ouverture supérieure 6 du bac de rangement 5 est dégagée.

La porte 11 peut être montée mobile en rotation sur la partie supérieure du bac de rangement 5 de la console 1. Le bac de rangement 5 est disposé sous la porte 11.

La porte 11 peut être mobile en rotation autour d'un axe de rotation à l'extrémité arrière du bac de rangement 5.

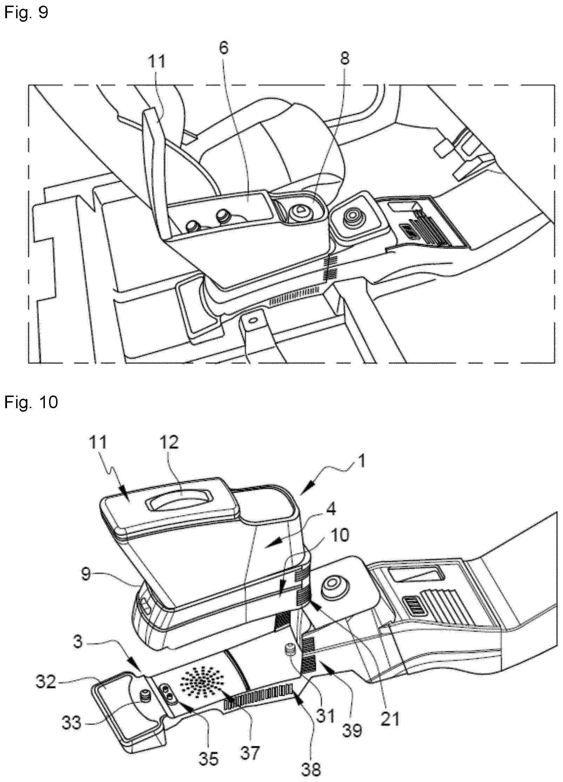

La position ouverte de la porte 11 (figure 9) permet notamment d'accéder au bac de rangement 5 en dégageant l'ouverture supérieure 6 du bac de rangement 5. Un utilisateur du véhicule peut ainsi visualiser et/ou placer et/ou retirer des objets du bac de rangement 5.

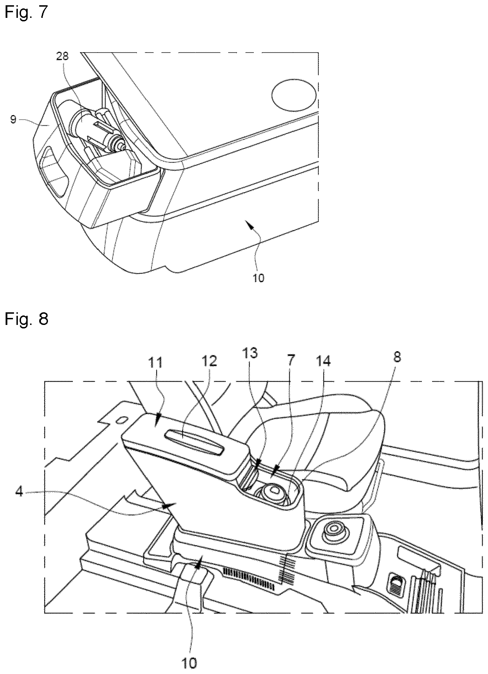

Dans une position fermée de la porte 11 (figure 8), la porte 11 permet une fermeture de l'ouverture supérieure 6 du bac de rangement 5. Ceci permet notamment de retenir des objets placés dans le bac de rangement 5. De préférence, la porte 11 est fermée lorsque le véhicule se déplace, notamment pour garantir la sécurité des usagers.

Avantageusement, la porte 11, ayant pour fonction la fermeture du bac de rangement 5, présente en outre une fonction d'accoudoir. Une telle porte 11 présentant une fonction d'accoudoir permet d'améliorer le confort du conducteur ou d'un passager avant.

L'accoudoir 11 s'étend selon la direction longitudinale X lorsque la console 1 est positionnée sur le socle 3 dans le véhicule.

De préférence, l'accoudoir 11 comprend un matériau souple pour le confort des usagers.

De préférence, la console 1 peut comprendre un moyen de verrouillage / déverrouillage de la porte 11 sur le bac de rangement 5. Le moyen de verrouillage / déverrouillage de la porte 11 peut comprendre par exemple au moins un verrou ou au moins un aimant ou au moins un crochet (non représenté) à l'extrémité avant de la porte 11. Le moyen de verrouillage / déverrouillage de la porte 11 est notamment destiné à maintenir la porte 11 en position fermée, notamment lorsqu'un utilisateur déplace la console portative 1.

Avantageusement, la porte 11 comprend une poignée 12 intégrée. La poignée 12 est destinée à servir de moyen de préhension pour la console portative 1. Avantageusement, la poignée 12 peut permettre en outre la déconnexion et/ou le déverrouillage de la console 1 par rapport au socle 3. Ceci sera décrit plus en détails ci-après en référence à la figure 10.

Avantageusement, la poignée 12 est une poignée intégrée à la porte 11, notamment de façon affleurante. Lorsque la poignée 12 est en position rangée ou non activée, la surface supérieure de la poignée 12 se trouve au même niveau que le reste de la porte 11 selon la direction Z.

La poignée 12 est par exemple du type poignée de virage habituellement utilisée dans un véhicule automobile.

Un avantage d'une telle poignée 12 réside dans un confort accru pour un usager du véhicule, une telle poignée 12 ne gênant pas la fonction d'accoudoir de la porte 11 de la console 1.

Avantageusement, la console 1 comprend un volet ou rideau glissant 13 apte à passer d'une position déployée, dans laquelle l'ouverture supérieure 8 du compartiment 7 est obturée, à une position rangée, dans laquelle l'ouverture supérieure 8 du compartiment 7 est dégagée.

Le volet 13, quand il est déployé, permet de conserver un récipient disposé sur le support 14 du compartiment 7 au frais.

La position rangée du volet 13 (figures 8 et 9) permet notamment d'accéder au compartiment 7 en dégageant l'ouverture supérieure 8 du compartiment 7. Un utilisateur du véhicule peut ainsi notamment accéder à un récipient disposé sur le support 14 du compartiment 7.

Le volet 13, ayant une fonction de fermeture du compartiment 7, présente en outre une fonction d'étanchéité lorsqu'il est en position rangée, en permettant d'obturer la ou les ouvertures 16 de la paroi perforée 15.

Le volet 13 est monté mobile sur la partie supérieure du compartiment 7 de la console 1, entre la position déployée et la position rangée. Le volet 13 est apte à s'enrouler dans la partie arrière du compartiment 7, pour passer de la position déployée vers la position rangée (figures 3, 5, 12). Le mouvement du volet 13 présente de préférence une cinématique de type rideau glissière, par exemple du type volet ou rideau d'obturation.

Avantageusement, la console 1 peut comprendre un moyen d'aération ou aérateur dans le même compartiment 7 que le support 14 de type porte-gobelet. Ceci sera décrit plus en détails ci-après en référence à la figure 6.

Avantageusement, la console 1 comprend une paroi 15 disposée entre le bac de rangement 5 et le compartiment 7, ladite paroi 15 comprenant au moins un trou 16. Cette paroi 15 est particulièrement bien visible sur la figure 4.

Entre les deux compartiments 5, 7 du corps 4 de la console 1, la paroi alvéolée et perforée 15 permet le passage de l'air en position déployée du volet 13.

La position rangée du volet 13 permet d'obturer l'au moins un trou 16 de la paroi 15. Le volet 13, pour passer de la position déployée vers la position rangée, est apte à s'enrouler derrière la paroi 15.

Le corps 4 compartimenté de la console 1 permet de bloquer l'air en cas d'ouverture d'un compartiment 5, 7, afin de maintenir de l'air frais dans la console 1. Quand on ouvre le volet 13 du compartiment 7 (position rangée du volet 13), on ne perd pas le froid du côté du bac de rangement 5 grâce à la fonction d'obturation du volet 13 pour l'au moins une ouverture 16 de la paroi 15.

L'au moins un trou 16 de la paroi 15 peut présenter une forme de fente, par exemple allongée.

En variante, l'au moins un trou 16 de la paroi 15 peut présenter d'autres formes, par exemple une forme circulaire.

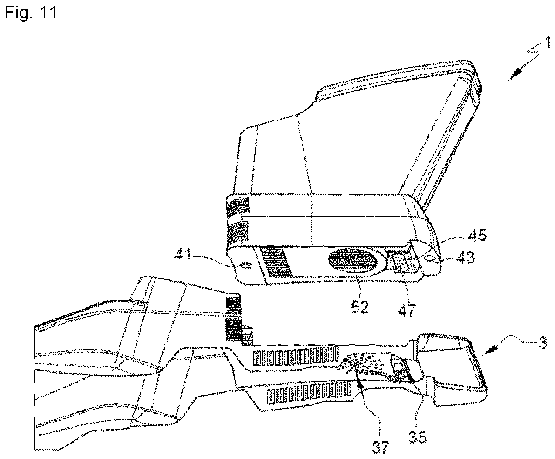

Avantageusement, la console 1 est apte à être fixée de façon amovible au plancher du véhicule, notamment sur un support ou embase ou socle 3, comme cela sera décrit plus en détails ci-après en référence aux figures 10 et 11. Ceci permet de fixer la console 1 et de la maintenir, notamment dans l'habitacle du véhicule. En outre, la console 1 est apte à être connectée électriquement à l'alimentation principale du véhicule par l'intermédiaire du socle 3.

Selon un mode de réalisation, on pourra choisir pour la console 1 une forme volontairement asymétrique pour que l'usager ne se trompe pas de sens lors du positionnement de la console 1 sur le socle 3.

Avantageusement, la console 1 peut comprendre une alimentation annexe afin de pouvoir être alimentée électriquement hors du véhicule. Cela décrit plus en détails ci-après en référence à la figure 7.

La console 1 comprend un système de refroidissement indépendant.

Le système de refroidissement de la console 1 peut comprendre un bloc thermoélectrique 60 situé par exemple en partie basse ou inférieure 10 de la console 1, sous le corps 4 comprenant les compartiments de rangement 5, 7.

Le bloc thermoélectrique 60 peut comprendre une cellule de Peltier 20. Une telle cellule est une cellule plate comprenant deux faces. Quand la cellule de Peltier est alimentée, une face se réchauffe, l'autre face se refroidit.

La bloc thermoélectrique 60 de la console 1 peut comprendre un système électrique et électronique de pilotage. Le système électrique et électronique de pilotage peut comprendre un ou des calculateurs.

La console 1 peut comprendre un système de réglage du froid.

Avantageusement, la console 1 peut comprendre un bouton de réglage destiné à gérer le niveau de froid (par exemple niveau faible, niveau moyen, niveau élevé de froid).

Le bouton de réglage du froid (non représenté) peut se trouver sur les parois de la console 1 à l'intérieur ou à l'extérieur de la console 1.

Avantageusement, la console 1 peut comprendre une enveloppe ou habillage entourant le corps 4 compartimenté et/ou le système thermoélectrique 60. L'enveloppe ou habillage est destinée à augmenter la qualité perçue de la console 1.

Le système thermoélectrique 60 est hermétique.

Le système thermoélectrique 60 peut comprendre tout ou partie des éléments suivants :
- une cellule de Peltier 20,
- un bloc de refroidissement,
- un bloc de diffusion,
- une paroi étanche,
- un ventilateur à double volute 21.

Le ventilateur 21 est destiné à la ventilation directe en zone avant de la console 1.

Avantageusement, le ventilateur 21 est disposé dans la partie avant du système thermoélectrique 60 lorsque la console 1 est positionnée sur le socle 3. Le ventilateur 21 est destiné à la réinjection d'air ambiant, notamment pour éviter une condensation à l'intérieur des deux compartiments 5, 7 de la console 1. Ceci permet notamment d'éviter que de l'eau coule au fond de la console 1.

Le système thermoélectrique 60 peut être du type habituellement utilisé pour générer chaud/froid du froid d'un côté et du chaud de l'autre par compensation thermique.

De l'air froid fourni par le système thermoélectrique 60 permet de réfrigérer le corps 4 de la console 1, et de l'air chaud est évacué par le bas de la console 1, notamment dans l'habitacle du véhicule. L'air chaud est notamment évacué par un aérateur 52 (figure 11) disposé dans la partie inférieure du bloc thermoélectrique 60.

Le système thermoélectrique 60 peut comprendre des moyens 25 pour souffler de l'air vers le bac de rangement 5 et/ou des moyens 26 pour souffler de l'air vers le compartiment 7 (figure 5).

Le fond du bac de rangement 5 peut comprendre une zone perforée 24 pour permettre le passage de l'air (figure 6). La zone perforée 24 du fond du bac de rangement 5 est configurée pour être alignée avec les moyens 25 du système thermoélectrique 60.

Entre les deux compartiments 5, 7 du corps 4 de la console 1, la paroi alvéolée et perforée 15 permet le passage de l'air.

A titre d'exemple, de l'air frais peut être soufflé par le bloc thermoélectrique 60 en passant environ à 70% dans le bac de rangement 5 et environ à 30% dans le compartiment 7. Les 30% d'air frais environ repartent ensuite dans le bac de rangement 5. Une partie de l'air frais est recyclé pour être refroidi de nouveau.

La partie du chaud et du froid est séparée par une paroi centrale et horizontale 61, 62, 63 autour du bloc thermoélectrique 60 (figures 3 et 4).

Si le compartiment 7 est libéré de la présence de tout récipient, il est alors possible de ventiler de l'air frais par ce compartiment 7 (figure 6). Avantageusement, le fond du compartiment 7 est perforé ou comprend au moins une zone perforée 23.

De façon optionnelle, un ventilateur pourrait être prévu sous le support 14 de type porte-gobelet dans le compartiment 7. Dans le cas où aucun récipient se trouve sur le support 14 de type porte-gobelet, un tel ventilateur est destiné à servir de ventilation supplémentaire, notamment pour l'habitacle d'un véhicule. Le ventilateur permet d'accélérer l'air vers l'extérieur de la console 1 par la zone perforée 23 ou le fond perforé du compartiment 7.

Quand le volet 13 est déployé, l'air frais circule du compartiment 7 au bac de rangement 5. Ceci permet de rafraichir les deux compartiments 5, 7 de la console 1.

Quand le volet 13 est rangé, ce dernier stoppe en partie la circulation d'air frais dans le corps 4 de la console 1. Ceci permet de créer un effet d'air frais dans la zone du porte-gobelet du compartiment 7 et voire de ventiler un maximum.

Quand le volet 13 du compartiment 7 est rangé, on ne perd pas le froid du côté du bac de rangement 5 grâce à l'obturation de l'au moins une ouverture 16 de la paroi 15.

Un mode de réalisation d'un système de console, comprenant une console 1 du type de celle décrite ci-dessus et un socle 3 configuré pour recevoir et maintenir la console 1 de façon amovible, est décrit ci-après en référence aux figures 10 et 11.

Le socle 3 peut comprendre des moyens de maintien et/ou de verrouillage. Les moyens de maintien et/ou de verrouillage peuvent comprendre au moins un ergot, par exemple un premier ergot 31 à l'extrémité avant du socle 3 et un deuxième ergot 33 à l'extrémité arrière du socle 3.

Le socle 3 peut comprendre en outre des moyens de connexion électrique. Le socle 3 comprend par exemple au moins un plot ou plaque de réception électrique 35. Le plot 35 comprend au moins un contacteur électrique. Le plot 35 permet en outre d'assurer une fonction de pion de centrage et de verrouillage.

La partie inférieure 10 de la console 1 peut comprendre deux logements creux ou ouvertures 41, 43 et deux contacteurs électriques 45, 47.

Les logements creux 41, 43 de la console 1 peuvent être configurés pour s'emboîter avec les deux ergots 31, 33 du socle 3.

Les contacteurs électriques 45, 47 de la console 1 peuvent être configurés pour venir en contact avec le plot 35 du socle 3. Le socle 3 permet ainsi d'assurer une connexion et une alimentation électrique de la console 1 via le plot 35.

Avantageusement, le socle 3 peut comprendre des trous 37, notamment répartis en forme d'étoile, sur sa surface principale parallèle au plan (X, Y).

Avantageusement, le socle 3 peut comprendre des fentes 38, disposées sur les parois longitudinales du socle 3 parallèles au plan (X, Z).

Les trous en étoile 37 et les fentes 38 sont destinés à l'évacuation de l'air chaud lorsque la console 1 est positionnée sur le socle 3. L'air chaud circule par les trous en étoile 37, puis par les fentes 38.

Avantageusement, le socle 3 peut comprendre des fentes 39, disposées sur la portion avant du socle 3.

Les fentes 39 du socle 3 sont destinées à la récupération de l'air ambiant, selon une boucle interne.

Avantageusement, le ventilateur 21 du bloc thermoélectrique 60 de la console 1 et les fentes 39 du socle 3 sont configurés pour être alignés lorsque la console 1 est positionnée sur le socle 3. Ceci permet d'optimiser la circulation de l'air.

Les formes avant et arrière de la partie inférieure 10 de la console 1 apportent un maintien dans deux directions et un bon centrage. Le plot 35 bloque ou libère une troisième direction. Un système de maintien supplémentaire pourrait être prévu pour verrouiller l'avant et l'arrière de la console 1, notamment en pivotant légèrement la console.

La partie arrière 32 du socle 3 peut servir de repose-pied pour un passager arrière.

Le déverrouillage et l'extraction de la console 1 peut être obtenu par la poignée 12 intégrée à la porte 11. On pourra prévoir un système de verrouillage / déverrouillage de la console 1 par rapport au socle 3 permettant de libérer la console 1 lors du déploiement ou de l'activation de la poignée 12. La console 1 peut ainsi être déconnectée du socle 3 et elle est portative. La console 1 peut être déplacée hors du véhicule ou peut être positionnée à un autre emplacement dans le véhicule.

Lorsque la poignée 12 est activée ou se déploie (figure 10), ceci permet le déverrouillage de la console 1 par rapport au socle 3.

Selon un mode de réalisation, la console 1 peut comprendre un système de câbles intégré (non visible) pouvant être relié aux ergots 31, 33. Le système de câbles peut permettre de libérer le pion 35 de centrage et de verrouillage.

Selon une variante, la console 1 pourra comprendre d'autres systèmes pour le verrouillage / déverrouillage de la console 1 par rapport au socle 3.

Eventuellement, une alimentation électrique de la console 1 pourrait également être obtenue grâce aux ergots 31, 33.

Avantageusement, la console 1 peut comprendre en outre une trappe ou tiroir 9 apte à coulisser au moins en partie dans la partie inférieure ou partie basse 10 (figure 7). Le tiroir 9 est apte à passer d'une position fermée, dans laquelle le tiroir 9 se trouve dans la partie inférieure 10, à une position ouverte, dans laquelle le tiroir 9 se trouve au moins en partie hors de la partie inférieure 10. La position ouverte du tiroir 9 permettant de libérer une ouverture supérieure du tiroir 9 et d'accéder à l'intérieur du tiroir 9.

Le tiroir 9 peut se situer à l'arrière de la console 1 lorsque la console est positionnée sur le socle 3.

Le tiroir peut permettre d'accéder à une prise 220 V et/ou à une prise 12 V. Avantageusement, le tiroir 9 peut également permettre d'accéder au système thermoélectrique 60.

Le tiroir 9 est notamment destiné à recevoir une alimentation nomade. Le tiroir 9 permet d'assurer une fonction portative de la console réfrigérée.

Le tiroir 9 peut être destiné à recevoir un allume-cigare 28 et/ou une prise de 220 V et/ou une prise de 12 V. Le tiroir 9 permet de connecter électriquement la console 1 en 12 V ou sur le secteur. La console 1 peut ainsi être alimentée électriquement avec le secteur domestique ou avec l'alimentation du véhicule, en dehors du véhicule ou à un emplacement du véhicule autre que le socle 3.

La console 1 peut être réfrigérée même lorsqu'elle n'est pas disposée sur le socle 3. Grâce à l'allume-cigare, on peut alimenter la console 1 en 12 V, par exemple dans le coffre du véhicule, notamment lors d'un pique-nique.

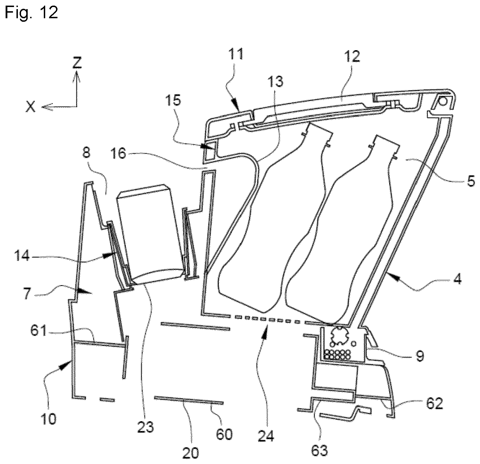

Le fonctionnement d'une console 1 du type de celle décrite ci-dessus est décrit ci-dessous en référence à la figure 12.

Chaque compartiment de la console 1 a son rôle.

Le compartiment inférieur 10 ou bloc thermoélectrique 60 fonctionne en boucle fermée. Il permet de réutiliser l'air frais et est destiné à l'alimentation thermique de la console 1. Le bloc thermoélectrique 60 fonctionne de façon similaire à une climatisation et permet de conserver une température constante.

Selon un mode de réalisation, l'air frais peut circuler dans le bac de rangement 5 dans le sens horaire quand le volet 13 est déployé. Dans ce mode de réalisation, l'air froid peut passer d'abord par le compartiment 7 puis par le bac de rangement 5. L'air froid est réaspiré puis refroidit puis réintroduit dans le cycle de refroidissement. Dans ce mode de réalisation, on privilégie ainsi le refroidissement d'un récipient éventuellement placé sur le support 14 de type porte-gobelet du compartiment 7. Si aucun récipient est présent sur le support 14, l'air froid passe dans le bac de rangement 5 pour maintenir la zone réfrigérée.

Selon un mode de réalisation, en ouvrant ou en rangeant le volet 13 du compartiment 7 indépendant du bac de rangement 5, on ferme le passage de l'air avec le bac de rangement 5 grâce au volet 13. Le volet 13, lorsqu'il est ouvert ou rangé, vient fermer l'au moins une ouverture 16 de la paroi 15 alvéolée et perforée entre les deux compartiments 5, 7 du corps 4 de la console 1. Ceci permet de garder la zone froide du bac de rangement 5, notamment le temps de boire sa boisson. Le froid souffle dans le compartiment 7, notamment pour continuer à refroidir la boisson. En outre, cela permet de créer un courant d'air frais sur la main de l'utilisateur. Quand le volet 13 est fermé ou déployé à nouveau, l'air froid peut alors passer à nouveau dans le bac de rangement 5 par l'au moins une ouverture 16 de la paroi 15.

Si la porte 11 du bac de rangement 5 est ouverte, les deux compartiments 5, 7 perdent momentanément de l'air frais. Lorsque le volet 13 est rangé (ouvert), un froid constant peut toutefois être maintenu dans le bac de rangement 5. En effet, la porte 11 du bac de rangement 5 est en position ouverte pendant une durée réduite lorsque la console 1 est en place dans le véhicule.

Selon une variante, le sens de circulation de l'air froid à l'intérieur des deux compartiments 5, 7 pourrait être inversé. L'air froid pourrait circuler dans le sens inverse des aiguilles d'une montre. Dans cette variante, l'air frais circule d'abord vers le bac de rangement 5 puis vers le compartiment 7.

Dans toutes les variantes, le ventilateur à double-flux 21 permet de ramener de l'air froid dans l'habitacle grâce au flux d'air qui sort de la console 1.

La cellule de Peltier 20 du bloc thermoélectrique 60 crée de l'air chaud qui est reventilé en bas 10 de la console 1 et expulsé de la console 1 comme cela a été décrit précédemment.

Un avantage d'une console 1 du type de celle décrite ci-dessus est lié au fait que la console 1 comprend son propre système de refroidissement intégré 60. La console 1 est indépendante vis-à-vis d'un socle 3 apte à recevoir la console 1 dans un véhicule. La console 1 est transportable pour un pique-nique ou pour repas professionnel. La console 1 peut être alimentée avec le secteur domestique ou avec l'alimentation du véhicule pour être réfrigérée. Il est possible de faire un pré-conditionnement de la console 1 avant de rentrer dans le véhicule en la branchant à l'extérieur du véhicule (maison, garage, bureau, etc.). Ainsi, dès son verrouillage sur le socle 3, la console 1 est immédiatement opérationnelle.

Un autre avantage d'une console 1 du type de celle décrite ci-dessus réside dans le fait que le système de réfrigération ou de refroidissement intégré est de conception simple car il comprend une celle Peltier. Un fonctionnement de type glacière utilisé par une telle console permet de s'affranchir de l'utilisation d'un système de refroidissement utilisant un fluide de refroidissement. Il en résulte une masse réduite de la console et un gain d'énergie pour le véhicule.

Un autre avantage d'une console 1 du type de celle décrite ci-dessus réside dans le fait qu'elle peut être verrouillée au plancher du véhicule, par l'intermédiaire du socle 3. Ceci permet d'assurer le maintien de console 1 en cas de choc et d'éviter toutes vibrations.

Un autre avantage d'une console 1 du type de celle décrite ci-dessus est lié au fait que l'évacuation de l'air chaud du bloc thermoélectrique 60 se fait par le dessous de la console 1 et par le socle 3. Ceci permet de répartir ou de diriger au maximum cet air chaud sous les sièges des usagers.

Un autre avantage d'une console 1 du type de celle décrite ci-dessus réside dans le fait qu'elle peut servir d'une ventilation directe, notamment en zone avant de la console au niveau des avant-bras et des mains des usagers en position normale face à la route, afin de créer des sensations de froid.

Un avantage d'un système de console 1 et de socle 3 du type de celui décrit ci-dessus réside dans le fait que l'habitacle du véhicule pourrait être utilisé sans console. Une telle console 1 pourrait être prévue en accessoire du véhicule. La console 1 pourrait être temporairement remplacée par une autre console, par exemple une console d'un autre type, par exemple non réfrigérée, lorsque la console 1 réfrigérée est absente du socle 3. Il en résulte une utilisation plus modulable du véhicule par rapport à un véhicule comprenant une console centrale fixe.

Selon une variante, la console 1 pourrait être réversible, apte à être retournée sur le socle 3. Au lieu d'être disposée sur le socle 3 de sorte que le compartiment 7 se trouve devant le bac de rangement 5 selon la direction longitudinale X, la console 1 pourrait être disposée sur le socle 3 de sorte que le compartiment 7 se trouve derrière le bac de rangement 5 selon la direction longitudinale X.

Une telle variante permettrait à des passagers arrière du véhicule, installés sur des sièges du deuxième rang, d'accéder au compartiment 7 et donc au support 14 de type porte-gobelet. A cet effet, on pourra prévoir des moyens de maintien et/ou de verrouillage et des moyens de connexion électrique de la console 1 sur le socle 3 qui soient réversibles. On pourra également modifier la forme du bas de la console 1 et la forme du socle 3 pour que la console 1 et le socle 3 puissent s'emboiter dans les deux sens. La forme de l'accoudoir 11 pourra également être adaptée pour optimiser le confort des usagers dans les deux sens de positionnement de la console 1 sur le socle 3.

Eventuellement, la console 1 pourrait comprendre un système de ventilation comprenant un aérateur pour le deuxième rang (sièges des passagers arrière du véhicule).

Il a été décrit ci-dessus un système comprenant une console 1 et un socle 3, apte à être positionné à l'emplacement d'une console centrale d'un véhicule. Le système de console pourra bien entendu être positionné à un emplacement du véhicule autre que l'emplacement d'une console centrale, c'est-à-dire sur toute surface rigide délimitant l'intérieur ou l'habitacle d'un véhicule, à tout autre emplacement de l'habitacle du véhicule que la zone située entre le siège du conducteur et le siège du passager avant.

Il a été décrit ci-dessus une console 1 dont le corps 4 comprend un bac de rangement et un compartiment 7. Le corps 4 compartimenté de la console 1 pourra comprendre un nombre de compartiments supérieur à deux. En outre, le compartiment 7 pourra comprendre un ou plusieurs supports de type porte-gobelets.

Une console 1 du type de celle décrite ci-dessus et un système de console du type de celui décrit ci-dessus pourront être utilisés dans tous types de véhicules motorisés.

## Revendications

1. Console (1), notamment destinée à être fixée de façon amovible à un socle (3), comprenant :
- un corps (4) apte à être réfrigéré au moins partiellement, comprenant un bac de rangement (5) apte à être réfrigéré, un compartiment (7) comprenant au moins un support (14) destiné à recevoir un récipient, et une paroi (15), comprenant au moins un trou (16), interposée entre le bac de rangement (5) et le compartiment (7), le bac de rangement (5) et le compartiment (7) comprenant respectivement une première ouverture (6) et une deuxième ouverture (8) ;
- un système de refroidissement (60) ;
- une porte (11) apte à passer d'une position fermée, dans laquelle la première ouverture (6) du bac de rangement (5) est obturée, à une position ouverte, dans laquelle la première ouverture (6) du bac de rangement (5) est dégagée ;
- un volet (13) apte à passer d'une position déployée, dans laquelle la deuxième ouverture (8) du compartiment (7) est obturée, à une position rangée, dans laquelle la deuxième ouverture (8) du compartiment (7) est dégagée, la console (1) étant **caractérisée en ce que** la position rangée du volet (13) permet d'obturer l'au moins un trou (16) de ladite paroi (15).

2. Console selon la revendication 1, dans laquelle le fond (23) du compartiment (7) est perforé, et comprenant en outre un ventilateur disposé sous le fond perforé du compartiment (7).

3. Console selon la revendication 1 ou 2, dans laquelle la porte (11) comprend une poignée (12), notamment configurée pour verrouiller et déverrouiller la console (1) par rapport à un socle (3).

4. Console selon l'une quelconque des revendications précédentes, comprenant en outre un système de fixation apte au verrouillage et au déverrouillage de la porte (11) sur le bac de rangement (5).

5. Console selon l'une quelconque des revendications précédentes, dans laquelle le système de refroidissement comprend un système thermoélectrique (60) disposé sous le bac de rangement (5) et le compartiment (7), le système thermoélectrique comprenant notamment une cellule de Peltier.

6. Console selon l'une quelconque des revendications précédentes, comprenant en outre un tiroir (9) apte à coulisser dans la partie basse (10), notamment pour le rangement d'un dispositif d'alimentation nomade.

7. Système de console comprenant une console (1) selon l'une quelconque des revendications précédentes et un socle (3) configuré pour recevoir et maintenir la console (1) de façon amovible.

8. Système de console selon la revendication précédente, dans lequel la console (1) comprend au moins un logement creux (41, 43) destiné à recevoir un ergot (31, 33) du socle (3) pour le verrouillage de la console (1) sur le socle (3), notamment un premier logement creux (41) destiné à recevoir un premier ergot (31) du socle (3) et un deuxième logement creux (43) destiné à recevoir un deuxième ergot (33) du socle (3).

9. Système de console selon la revendication 7 ou 8, dans lequel la console (1) comprend au moins un contacteur électrique (45, 47) destiné à venir en contact avec un contacteur électrique (35) du socle (3).

10. Véhicule (100), notamment véhicule automobile, comprenant une console (1) selon l'une quelconque des revendications 1 à 6 ou un système de console selon l'une quelconque des revendications 7 à 9.

## Patentansprüche

1. Konsole (1), die insbesondere dazu bestimmt ist, abnehmbar an einem Sockel (3) befestigt zu sein, umfassend:
- einen Körper (4), der dazu geeignet ist, zumindest teilweise gekühlt zu werden, umfassend ein Aufbewahrungsfach (5), das dazu geeignet ist, gekühlt zu werden, ein Fach (7), das zumindest einen Träger (14) umfasst, der dazu bestimmt ist, einen Behälter aufzunehmen, und eine Wand (15), die zumindest ein Loch (16) umfasst, das zwischen dem Aufbewahrungsfach (5) und dem Fach (7) angeordnet ist, wobei das Aufbewahrungsfach (5) und das Fach (7) eine erste Öffnung (6) bzw. eine zweite Öffnung (8) umfassen;
- ein Kühlsystem (60);
- eine Tür (11), die dazu geeignet ist, aus einer geschlossenen Position, in der die erste Öffnung (6) des Aufbewahrungsfachs (5) verschlossen ist, in eine offene Position, in der die erste Öffnung (6) des Aufbewahrungsfachs (5) freigegeben ist, zu wechseln;
- eine Klappe (13), die dazu geeignet ist, aus einer ausgefahrenen Position, in der die zweite Öffnung (8) des Fachs (7) verschlossen ist, in eine verstaute Position, in der die zweite Öffnung (8) des Fachs (7) freigegeben ist, zu wechseln,
wobei die Konsole (1) **dadurch gekennzeichnet ist, dass** die verstaute Position der Klappe (13) es ermöglicht, das zumindest eine Loch (16) der Wand (15) zu verschließen.

2. Konsole nach Anspruch 1, wobei der Boden (23) des Fachs (7) perforiert ist, ferner umfassend einen Lüfter, der unter dem perforierten Boden des Fachs (7) angeordnet ist.

3. Konsole nach Anspruch 1 oder 2, wobei die Tür (11) einen Griff (12) umfasst, der insbesondere dazu konfiguriert ist, die Konsole (1) in Bezug auf einen Sockel (3) zu verriegeln und zu entriegeln.

4. Konsole nach einem der vorangehenden Ansprüche, ferner umfassend ein Befestigungssystem, das zum Verriegeln und Entriegeln der Tür (11) am Aufbewahrungsfach (5) geeignet ist.

5. Konsole nach einem der vorangehenden Ansprüche, wobei das Kühlsystem ein thermoelektrisches System (60) umfasst, das unter dem Aufbewahrungsfach (5) und dem Fach (7) angeordnet ist, wobei das thermoelektrische System insbesondere eine Peltier-Zelle umfasst.

6. Konsole nach einem der vorangehenden Ansprüche, ferner umfassend eine Schublade (9), die dazu geeignet ist, im unteren Teil (10) zu gleiten, insbesondere zur Aufbewahrung einer nomadischen Versorgungsvorrichtung.

7. Konsolensystem, umfassend eine Konsole (1) nach einem der vorangehenden Ansprüche und einen Sockel (3), der dazu konfiguriert ist, die Konsole (1) abnehmbar aufzunehmen und zu halten.

8. Konsolensystem nach dem vorangehenden Anspruch, wobei die Konsole (1) zumindest eine hohle Aufnahme (41, 43) umfasst, die dazu bestimmt ist, eine Nase (31, 33) des Sockels (3) zur Verriegelung der Konsole (1) am Sockel (3) aufzunehmen, insbesondere eine erste hohle Aufnahme (41), die dazu bestimmt ist, eine erste Nase (31) des Sockels (3) aufzunehmen, und eine zweite hohle Aufnahme (43), die dazu bestimmt ist, eine zweite Nase (33) des Sockels (3) aufzunehmen.

9. Konsolensystem nach Anspruch 7 oder 8, wobei die Konsole (1) zumindest einen elektrischen Kontaktgeber (45, 47) umfasst, der dazu bestimmt ist, mit einem elektrischen Kontaktgeber (35) des Sockels (3) in Kontakt zu kommen.

10. Fahrzeug (100), insbesondere Kraftfahrzeug, umfassend eine Konsole (1) nach einem der Ansprüche 1 bis 6 oder ein Konsolensystem nach einem der Ansprüche 7 bis 9.

## Claims

1. Console (1), which is intended, in particular, to be attached to a base (3) in a removable manner, comprising:
- a body (4), which can be at least partially refrigerated, comprising a storage receptacle (5), which can be refrigerated, a compartment (7) comprising at least one support (14), which is intended to receive a container, and a wall (15), which comprises at least one hole (16) and is interposed between the storage receptacle (5) and the compartment (7), the storage receptacle (5) and the compartment (7) comprising a first opening (6) and a second opening (8), respectively;
- a cooling system (60);
- a door (11), which can move from a closed position, in which the first opening (6) in the storage receptacle (5) is closed off, to an open position, in which the first opening (6) in the storage receptacle (5) is unobstructed;
- a shutter (13), which can move from a deployed position, in which the second opening (8) in the compartment (7) is closed off, to a stowed position, in which the second opening (8) in the compartment (7) is unobstructed, the console (1) being **characterized in that** the stowed position of the shutter (13) allows the at least one hole (16) in said wall (15) to be shut off.

2. Console according to Claim 1, wherein the bottom (23) of the compartment (7) is perforated, and further comprising a fan arranged beneath the perforated bottom of the compartment (7).

3. Console according to Claim 1 or 2, wherein the door (11) comprises a handle (12), which is configured, in particular, to lock and unlock the console (1) with respect to a base (3).

4. Console according to any one of the preceding claims, further comprising an attachment system, which can lock and unlock the door (11) on the storage receptacle (5).

5. Console according to any one of the preceding claims, wherein the cooling system comprises a thermoelectric system (60) arranged beneath the storage receptacle (5) and the compartment (7), the thermoelectric system comprising, in particular, a Peltier cell.

6. Console according to any one of the preceding claims, further comprising a drawer (9), which can slide within the lower portion (10), in particular for storing a portable power supply device.

7. Console system comprising a console (1) according to any one of the preceding claims and a base (3), which is configured to receive and hold the console (1) in a removable manner.

8. Console system according to the preceding claim, wherein the console (1) comprises at least one hollow housing (41, 43), which is intended to receive a stud (31, 33) of the base (3) for locking the console (1) on the base (3), in particular a first hollow housing (41), which is intended to receive a first stud (31) of the base (3), and a second hollow housing (43), which is intended to receive a second stud (33) of the base (3).

9. Console system according to Claim 7 or 8, wherein the console (1) comprises at least one electrical contactor (45, 47), which is intended to come into contact with an electrical contactor (35) of the base (3) .

10. Vehicle (100), in particular motor vehicle, comprising a console (1) according to any one of Claims 1 to 6 or a console system according to any one of Claims 7 to 9.
